# EUROPÄISCHE PATENTSCHRIFT

(11) **EP 2 351 954 B1**
(45) Veröffentlichungstag und Bekanntmachung des Hinweises auf die Patenterteilung: **23.04.2014**
(21) Anmeldenummer: 11150569.9
(22) Anmeldetag: 11.01.2011
(51) Int. Cl.: F16K 27/02, F16K 31/04

(54) **Ventil**
Valve
Soupape

(30) Priorität: 12.01.2010 DE 102010000840
(43) Veröffentlichungstag der Anmeldung: 03.08.2011
(73) Patentinhaber: IT Inventor GmbH, 48465 Samern (DE)
(72) Erfinder: Thannhäuser, Ingo, 48465 Samern (DE)
(74) Vertreter: Werner & ten Brink

(56) Entgegenhaltungen:
- EP-A1- 2 078 890
- DE-A1- 2 352 121
- DE-A1- 2 944 125
- DE-A1- 19 654 417
- DE-A1-102006 032 082
- DE-A1-102008 010 571
- US-A1- 2009 212 243

## Beschreibung

Die Erfindung betrifft ein Ventil mit einer Antriebseinheit, insbesondere ein derartiges Ventil zur Verwendung in wannenartigen Behältnissen, insbesondere zur Verwendung in einer Rückhaltevorrichtung wie in der nicht vorveröffentlichten DE 10 2009 056 276.1 beschrieben.

Ventile sind an sich als technische Bauteile, die dazu dienen, den Ein- oder Auslass von Gasen oder Flüssigkeiten zu kontrollieren oder deren Fließrichtung zu beeinflussen, bekannt. Ventile lassen sich grob einteilen in handbetätigte Ventile und Ventile mit einer Antriebseinheit. Die Erfindung betrifft ein Ventil mit einer Antriebseinheit, so dass eine automatische Aktivierung oder Deaktivierung des Ventils aufgrund eines automatisch sensierten Ereignisses, wie z. B. Rohrbruch oder dergleichen, möglich ist. Als Ventile mit einer Antriebseinheit kommen elektrisch betätigte Ventile, pneumatisch betätigte Ventile, hydraulisch betätigte Ventile und dergleichen in Betracht.

Nachteilig bei bisher bekannten Ventilen ist eine häufig im Vergleich zur Baugröße relativ geringe maximal mögliche Durchflussmenge. Weiter nachteilig sind verschiedenste bisher bekannte Bauformen, speziell wenn die Verwendung in einem wannenartigen Gebilde nach Art der o. g. Flüssigkeitsrückhaltevorrichtung (im Folgenden allgemein kurz als "Wanne" bezeichnet) geplant ist.

Aus der den gattungsbildenden Stand der Technik bildenden DE 10 2006 032 082 A ist ein Ventil zum im Wesentlichen gasdichten Unterbrechen eines Fließwegs zwischen zwei eckförmig angeordneten Anschlüssen bekannt. Das Ventil weist die Anschlüsse in einem ersten Gehäuseteil und Mittel für einen pneumatischen Antrieb eines Kolbens in einem zweiten Gehäuseteil auf. Das Ventil eignet sich aufgrund der Gestaltung der Anschlüsse nicht für einen Einbau in einer Wanne der eingangs genannten Art sondern allenfalls für einen äußeren Anbau an einer solchen Wanne und wird normalerweise an die Enden einer Rohrleitung angeschlossen. Ein besonderer Schutz der Antriebseinheit, abgesehen von dem durch das Ventilgehäuse gegebenen Schutz, ist nicht vorgesehen. Die DE 29 44 125 A zeigt einen Antrieb für Ventile, bei dem ein Kurbelgetriebe in einem ersten und zweiten Lager gelagert ist. Eines der Lager ist in einem Einbauflansch angeordnet. In Bezug auf diesen Flansch befinden sich eine Ein- und Auslassöffnung und ein Antriebsmotor auf unterschiedlichen Seiten. Das Ventil eignet sich ebenfalls nicht für einen Einbau in sondern höchstens für einen Anbau an eine Auffangwanne. Aus der EP 2 078 890 A ist eine Ventileinheit speziell für eine Verwendung beim Blasformen von Kunststoffkörpern bekannt. Die Ventileinheit weist eine grundsätzlich kompakte Bauform auf, allerdings befinden sich die Vorrichtungen für einen pneumatischen Antrieb des Kolbens und dafür notwendige Steuer- und Entlüftungskanäle im gleichen Gehäuseabschnitt, so dass bei einem Einbau eines solchen Ventils die Antriebseinheit nach außen gewandt sein muss, damit die Kanäle zugänglich bleiben.

Eine Aufgabe der vorliegenden Erfindung besteht entsprechend darin, ein Ventil anzugeben, mit dem zumindest einzelne der oben skizzierten Nachteile beseitigt oder deren Auswirkungen reduziert werden.

Erfindungsgemäß wird diese Aufgabe mit einem Ventil mit den Merkmalen des Anspruchs 1 gelöst. Vorteilhafte Ausgestaltungen der Erfindung sind Gegenstand der abhängigen Ansprüche.

Eine große Anzahl bekannter Ventile erfordert ein erstes und ein davon räumlich getrenntes zweites Gehäuseteil, wobei in dem ersten Gehäuseteil der Absperrkörper, z. B. ein Kolben, beweglich ist und entsprechend dieses Gehäuseteil zumindest eine Einlass- und zumindest eine Auslassöffnung für das jeweilige Medium aufweist. Darüber hinaus ist das zweite Gehäuseteil vorgesehen, um die Antriebseinheit und die Kontaktmittel für dessen elektrische, hydraulische oder pneumatische Ansteuerung aufzunehmen. Derartige Ventile erfordern beim Anbringen z. B. an einer wannenartigen Flüssigkeitsrückhaltevorrichtung eine außen liegende Anbringung, so dass speziell das zweite Gehäuseteil und die darin befindliche Antriebseinheit äußeren Einwirkungen und damit z. B. mechanischen Beschädigungen ausgesetzt ist. Darüber hinaus stören ein oder mehrere derartige Ventile, die auf einer Außenseite einer solchen Flüssigkeitsrückhaltevorrichtung anzubringen wären, die optische Anmutung der Gesamtanordnung, wohingegen die Verwendung des erfindungsgemäßen Ventils eine besonders kompakte Bauform erlaubt.

Für die auch von dem erfindungsgemäßen Ventil umfasste zumindest eine Ein- und Auslassöffnung ist bevorzugt vorgesehen, dass das Gehäuse zumindest eine Einlassöffnung in einem ersten Gehäusedrittel und mindestens eine Auslassöffnung axial zentriert am Ende desselben Gehäusedrittels aufweist. Die verbleibenden anderen Gehäusedrittel stehen für die Antriebseinheit und den Kolben in einer Ruheposition bei offenem Ventil zur Verfügung.

Beim Einbau des Ventils wird dieses mit den beiden weiteren Gehäusedritteln durch eine Seitenwand in eine Wanne, ein Rohr oder dergleichen eingeführt und zwar soweit, bis die zumindest eine Einlassöffnung vollständig im Innern des jeweiligen Volumens, also des Rohrs, der Wanne, etc., zu liegen kommt. Die zumindest eine Auslassöffnung verbleibt außerhalb des Volumens. Nach außen ragt also nur ein verschwindend geringer Teil des Ventils und je nach Gestaltung des Ventilgehäuses im Bereich der Auslassöffnung, z. B. mit einem Gewinde oder mit einem Ansatzstück (Stutzen), ermöglicht das Ventil selbst unmittelbar einen Anschluss von Einrichtungen zur Gestaltung des weiteren Ableitungsweges für das jeweilige Medium.

Gemäß einer bevorzugten Ausführungsform umfasst das Ventil eine Mehrzahl von Einlassöffnungen, wobei diese im ersten Gehäusedrittel äquidistant über den Außenumfang des Gehäuses verteilt sind. Die Gesamtfläche der Einlassöffnungen bestimmt neben der Größe der Auslassöffnung die Menge des maximal das Ventil durchströmenden Mediums. Bevorzugt sind die Gesamtfläche der Einlassöffnung oder aller Einlassöffnungen und die Gesamtfläche der Auslassöffnung in etwa gleich.

Gemäß einer weiter bevorzugten Ausführungsform ist vorgesehen, dass das Ventil einen Flansch zur Kombination mit z. B. der o. g. Rückhaltevorrichtung, einer Wanne oder dergleichen aufweist. Der Flansch ist axial entlang des Ventilgehäuses an einer Position zwischen der mindestens einen Einlassöffnung und der mindestens einen Auslassöffnung angeordnet; also gegenüberliegend von einer Position der Antriebseinheit im Gehäuse. Der Flansch ermöglicht das sichere und flüssigkeitsoder gasdichte Anbringen des Ventils an z. B. der Flüssigkeitsrückhaltevorrichtung. Der Flansch befindet sich zwischen der mindestens einen Einlassöffnung und der mindestens einen Auslassöffnung, so dass nach dem Anbringen des Ventils mittels des Flansches sich die mindestens eine Einlassöffnung im Innern der Wanne/Rückhaltevorrichtung und sich die mindestens eine Auslassöffnung außerhalb befindet. Durch die Position des Flansches in Bezug auf die im Ventilgehäuse angeordnete Antriebseinheit wird ermöglicht, dass das Ventil zum größten Teil innerhalb z. B. der Flüssigkeitsrückhaltevorrichtung anbringbar ist.

Gemäß einer besonders bevorzugten Ausführungsform ist vorgesehen, dass die Antriebseinheit als Führungselement für den Kolben fungiert. Ein separates Führungselement im Innern des Ventilgehäuses ist damit entbehrlich und für das Ventil ergibt sich insgesamt eine besonders kompakte Bauform. Weiter bevorzugt ist vorgesehen, dass ein von der Antriebseinheit umfasstes Getriebe eine Außenkontur aufweist, die formschlüssig auf eine Innenkontur eines im Kolben gebildeten Hohlraums abgestimmt ist. Bei einem Ventil gemäß dieser Ausgestaltung fungiert also von der Antriebseinheit die Außenkontur eines davon umfassten Getriebes als Führungselement. Dafür ist diese formschlüssig auf eine Innenkontur des Kolbeninnenraums, also des im Kolben gebildeten Hohlraums, abgestimmt. Besonders günstig lässt sich diese Ausführungsform dadurch erreichen, dass zur Ummantelung des Getriebes eine metallische Hülse verwendet wird, die als Führungshülse und damit als Führungselement für den Kolben (Kolbenführungshülse) dient.

Bei einem Ventil der hier und nachfolgend beschriebenen Art kommt als Geometrie für den Kolben bevorzugt eine Geometrie mit einem kreisförmigen Querschnitt in Betracht. Der Kolben und/oder der Innenraum des Ventils lassen sich dann vergleichsweise günstig, vor allem aber mit der erforderlichen Genauigkeit, als Drehteil fertigen.

Bei einem Ventil mit einem Kolben mit kreisförmigem Querschnitt ist bevorzugt eine Verdrehsicherung im Kolben vorgesehen. Eine derartige Verdrehsicherung hat den Vorteil, dass bei Betrieb der Antriebseinheit, also zum Öffnen oder zum Schließen des Ventils, der Kolben selbst drehfest angeordnet ist, so dass der Betrieb der Antriebseinheit eine ausschließlich translatorische Bewegung des Kolbens hervorruft. Als Verdrehsicherung kommt besonders bevorzugt eine axiale, langgestreckte, schlitzförmige Ausnehmung im Kolben in Betracht. Diese Ausnehmung geht bevorzugt von einer unteren Kante des Kolbens aus. In die Ausnehmung greift ein im Ventilgehäuse angebrachter, axial orientierter Stift ein. Wegen der schlitzförmigen Kontur der Ausnehmung kann der Stift bei geöffnetem Ventil, also zurückgezogenem Kolben, im Wesentlichen mit seiner vollständigen Länge in die Ausnehmung eingeführt sein. Wenn das Ventil geschlossen ist, also bei vorgeschobenem Kolben, greift der Stift zumindest noch in einen Teil der Ausnehmung ein. Die Länge des Stifts und die Länge der Ausnehmung sind entsprechend bemessen.

Bei einer bevorzugten Ausführungsform des Ventils ist vorgesehen, dass der Kolben mit der Antriebseinheit über eine Gewindespindel verbunden ist. Ansonsten kommt z. B. auch eine Ausführung des Kolbens als Teil eines Hydraulik- oder Pneumatikzylinders in Betracht. Die Gewindespindel lässt sich über einen als Antriebseinheit fungierenden Elektromotor, ggf. mit Getriebe, in Rotation versetzen und die Rotationsbewegung kann in an sich bekannter Art in eine translatorische Bewegung des Kolbens umgesetzt werden. Die Verwendung einer Gewindespindel ermöglicht eine besonders genaue und kontinuierliche Positionierung des Kolbens. Zudem ermöglicht die Gewindespindel den Erhalt der jeweiligen Kolbenposition unabhängig von einer Bestromung der Antriebseinheit. Ein geschlossenes Ventil der hier beschriebenen Art bleibt entsprechend auch bei Stromausfall geschlossen.

Bevorzugt ist dabei vorgesehen, dass die Antriebseinheit impulsgesteuert ist. Der Antriebseinheit wird also eine elektrische Versorgungsspannung zugeführt, mit der die Antriebseinheit betreibbar ist. Bei Zuführung eines impulsförmigen Öffnen- oder Schließensignals wird die Antriebseinheit unter Verwendung der Versorgungsspannung in der jeweiligen Bewegungsrichtung in Betrieb gesetzt. Dazu umfasst die Antriebseinheit eine entsprechende Steuerungseinheit oder eine solche Steuerungseinheit ist der Antriebseinheit zugeordnet.

Die Steuerungseinheit umfasst auch Mittel zum Abschalten der Antriebseinheit in Abhängigkeit von einer erfassten Stromaufnahme. Die Stromaufnahme steigt an, wenn der Kolben eine Endstellung, entweder eine Endstellung bei geöffnetem Ventil oder eine Endstellung bei geschlossenem Ventil, erreicht. Die Stromaufnahme kann erfasst werden und mit einer mittleren Stromaufnahme verglichen werden. Sobald der Kolben eine der beiden Endstellungen erreicht, wird die erfasste Stromaufnahme über der mittleren Stromaufnahme liegen, so dass daraus ein Signal zum Abschalten der Antriebseinheit ableitbar ist. Bevorzugt kann zum Abschalten der Antriebseinheit in Abhängigkeit von der erfassten Stromaufnahme eine vorgegebene oder vorgebbare Zeitspanne berücksichtigt werden, während derer die Antriebseinheit trotz angestiegener Stromaufnahme noch aktiv bleibt, um auf diese Art und Weise ein sicheres Schließen des Ventils zu gewährleisten, z. B. indem an einer Vorderseite des Kolbens befindliche Dichtungselemente mit einer entsprechenden Kraft in der Schließstellung an die Gehäuseinnenwand des Ventils gepresst werden.

Bei einer bevorzugten Ausführungsform des Ventils sind ein Spindelkopf und die Vorderseite des Kolbens mit einem mit dem Kolben und/oder dem Spindelkopf lösbar verbindbaren Verschlusskappe abgedeckt. Die Verschlusskappe hat in einer besonders bevorzugten Ausführungsform eine glockenförmige, rotationssymmetrische Kontur. Die glockenförmige Kontur ist auf ihrer Oberfläche kantenfrei, so dass ansonsten zu besorgende Verwirbelungen des durch das offene Ventil strömenden Mediums soweit wie möglich vermieden werden. Zudem ermöglicht die lösbare Verbindbarkeit der Verschlusskappe mit der Kolbenvorderseite und/oder dem Spindelkopf ein einfaches Anbringen von Dichtungselementen. Als Dichtungselement zwischen Verschlusskappe und Kolbenvorderseite (Kolbenkopf) kommt ein O-Ring in Betracht (im Folgenden auch als Dichtungsring bezeichnet). Dieser Dichtungsring kontaktiert bei geschlossenem Ventil entlang seiner gesamten Länge einen Teil der Innenfläche des Ventilgehäuses und verschließt so den Strömungspfad zwischen der oder jeder Einlassöffnung einerseits und der mindestens einen Auslassöffnung andererseits. Als Material für den Dichtungsring zwischen Verschlusskappe und Kolbenkopf kommen bevorzugt Silikon und dergleichen in Betracht. Eine solche Materialwahl hat den Vorteil, dass die Elastizität des Dichtungsrings über ein weites Temperaturspektrum und auch über lang andauernde Benutzungszeiten gewährleistet bleibt. Die Elastizität des Dichtungsrings ist wesentlich für ein sicheres und vollständiges Schließen des Ventils.

Besonders bevorzugt ist bei dem hier oder nachfolgend beschriebenen Ventil vorgesehen, dass sich ein Durchflussraum, also ein Abschnitt im Innenraum des Ventilgehäuses, zwischen der oder jeder Einlassöffnung und der mindestens einen Auslassöffnung konisch verengt oder zumindest abschnittsweise konisch verengt. Die konische Verengung im Durchflussraum ist zur Kontaktierung durch den Dichtungsring zwischen Verschlusskappe und Kolbenkopf vorgesehen. Die konische Verengung erlaubt ein besonders sicheres Schließen des Ventils und zwar auch dann, wenn der Dichtungsring aufgrund von Temperatureinfluss besonders elastisch ist aufgrund von Alterung bereits an Elastizität verloren hat. Die Antriebseinheit schiebt den Kolben mit dem daran befindlichen Dichtungsring in Richtung auf den sich konisch verengenden Abschnitt im Durchflussraum. Sobald ein Kontakt zwischen Dichtungsring und konisch verengtem Abschnitt des Durchflussraums hergestellt ist, schließt das Ventil. Aufgrund der konischen Verengung ist dennoch noch eine weitere Bewegung des Kolbens in Richtung auf die Auslassöffnung möglich. Der Dichtungsring wird dabei weiter in die konische Verengung gepresst, so dass stets eine Dichtigkeit des geschlossenen Ventils gewährleistet ist.

Weiter bevorzugt ist eine gleichzeitig als Abstreifring fungierende Dichtung zwischen Kolben und Innenoberfläche des Gehäuses vorgesehen. Diese Dichtung, im Folgenden als Kolbendichtung bezeichnet, verhindert ein Eindringen des durch das Ventil strömenden Mediums in den Bereich, in dem die Antriebseinheit angeordnet ist. Entsprechend wird auch ein Eindringen von eventuell mit dem Medium transportierten Schmutzteilchen oder dergleichen in diesen Bereich des Ventils verhindert. Dadurch, dass die Kolbendichtung gleichzeitig als Abstreifring fungiert, ist auch gewährleistet, dass eventuell an der Oberfläche des Kolbens anhaftende Verschmutzungen oder dergleichen nicht in den Abschnitt des Ventils mit der Antriebseinheit gelangen.

Besonders bevorzugt ist bei Ausführungsformen des Ventils ein Heizelement oder eine Mehrzahl von Heizelementen vorgesehen. Das Heizelement gewährleistet einen sicheren und funktionstüchtigen Betrieb des Ventils auch bei niedrigen Temperaturen, insbesondere bei Temperaturen unter dem Gefrierpunkt. Als Heizelement kommt besonders bevorzugt ein Element in Betracht, das elektrische Energie in Wärmeenergie umwandelt, also z. B. ein ohmscher Verbraucher, insbesondere ein ohmscher Widerstand. Teile der Innenfläche des Ventilgehäuses können dabei selbst als ohmscher Verbraucher fungieren. Hier kommt insbesondere in Betracht, derartige Abschnitte der Innenfläche des Ventilgehäuses mit einer Wechselspannung, insbesondere einer hochfrequenten Wechselspannung, zu beaufschlagen, um durch Wirbelstromeffekte oder dergleichen eine Temperaturerhöhung der Innenoberfläche des Ventilgehäuses oder Teilen/Segmenten davon zu erreichen. Alternativ oder zusätzlich kommt die Einbettung von Heizdrähten in die Innenoberfläche des Ventilgehäuses oder Abschnitte davon in Betracht. Schließlich kommt als Heizelement sogar eine Glühbirne oder dergleichen in Betracht, die hinsichtlich der erreichbaren Wärmeentwicklung wie ein ohmscher Verbraucher anzusehen ist und die ebenfalls abschnittsweise das Ventilgehäuse erwärmt. Dadurch, dass das Ventilgehäuse metallisch, also ein guter Wärmeleiter ist, ist gewährleistet, dass durch Glühbirnen oder dergleichen hervorgerufene abschnittsweise Erwärmungen des Ventilgehäuses auch vom Anbringungsort des jeweiligen ohmschen Verbrauchers bzw. der Glühbirne entfernte Bereiche des Ventilgehäuses erreichen.

Das hier und nachfolgend beschriebene Ventil, eventuell mit einzelnen oder mehreren bevorzugten Ausgestaltungen, ist bevorzugt in einer Rückhaltevorrichtung wie in der nicht vorveröffentlichten DE 10 2009 056 276 angebracht, so dass die Erfindung insgesamt auch eine derartige Rückhaltevorrichtung mit zumindest einem Ventil der hier beschriebenen Art betrifft. Für die Rückhaltevorrichtung ist bevorzugt eine Ventilsteuerung vorgesehen, die mit davon umfassten Mitteln eine automatische Ansteuerung des oder jedes Ventils zu vorgegebenen oder vorgebbaren Zeitpunkten veranlasst. Das automatische Ansteuern jedes Ventils oder einzelner Ventile gewährleistet eine Leichtgängigkeit des Ventils im Aktivierungsfall. Es kann nämlich vorkommen, dass ein Schließen des Ventils der Rückhaltevorrichtung aufgrund von Rohrbruch oder dergleichen über einen extrem langen Zeitraum der Verwendung der Rückhaltevorrichtung nicht erforderlich ist. Dann ist nicht auszuschließen, dass sich an beweglichen Teilen des Ventils Ablagerungen gebildet haben, die eine Bewegung des Kolbens erschweren oder verhindern. Evtl. kann es dann dazu kommen, dass das Ventil, nicht, nicht vollständig oder nicht rechtzeitig schließt. Dadurch, dass die Ventilsteuerung das oder jedes Ventil periodisch aktiviert, ist sichergestellt, dass zumindest in regelmäßigen Abständen eine Bewegung des Ventils erfolgt, so dass eine Beweglichkeit des Ventilkolbens erhalten bleibt.

Die Ventilsteuerung der Rückhaltevorrichtung reagiert ansonsten automatisch auf Eingangssignale, die für die Rückhaltevorrichtung eine Sondersituation kodieren. Bei einem solchen Eingangssignal steuert die Ventilsteuerung das oder jedes von der Rückhaltevorrichtung umfasste Ventil an, so dass das Ventil geschlossen wird. Als Sondersituation kommt eine Verunreinigung der in der Rückhaltevorrichtung befindlichen Flüssigkeit in Betracht, die mit einem entsprechenden Sensor sensierbar ist. Je nach verunreinigendem Medium kann als Sensor z. B. ein Leitfähigkeitssensor, ein Temperatursensor, ein Photowiderstand oder dergleichen in Betracht kommen. Neben solchen Sensoren, die im Innern der Rückhaltevorrichtung anzubringen sind, so dass ein Kontakt mit einem dort zurückgehaltenen Medium möglich ist, kommen auch Sensoren an einem Aggregat, für das die Rückhaltevorrichtung vorgesehen ist, z. B. ein Transformator mit Ölkühlung oder dergleichen, in Betracht. Solche Sensoren sind bevorzugt Drucksensoren, die z. B. einen Druckabfall bei einem Rohrbruch oder dergleichen sensieren.

Die Rückhaltevorrichtung kann einzelne oder mehrere dieser Sensoren umfassen und die Ventilsteuerung kann entsprechend einzelne oder mehrere von solchen Sensoren gelieferte Signale zum Ansteuern des oder jedes Ventils verarbeiten.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

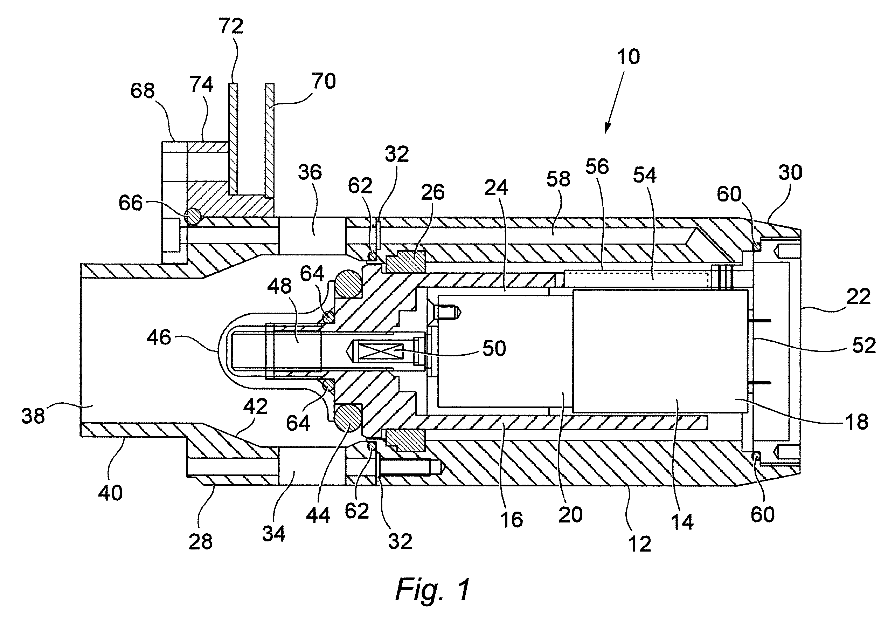

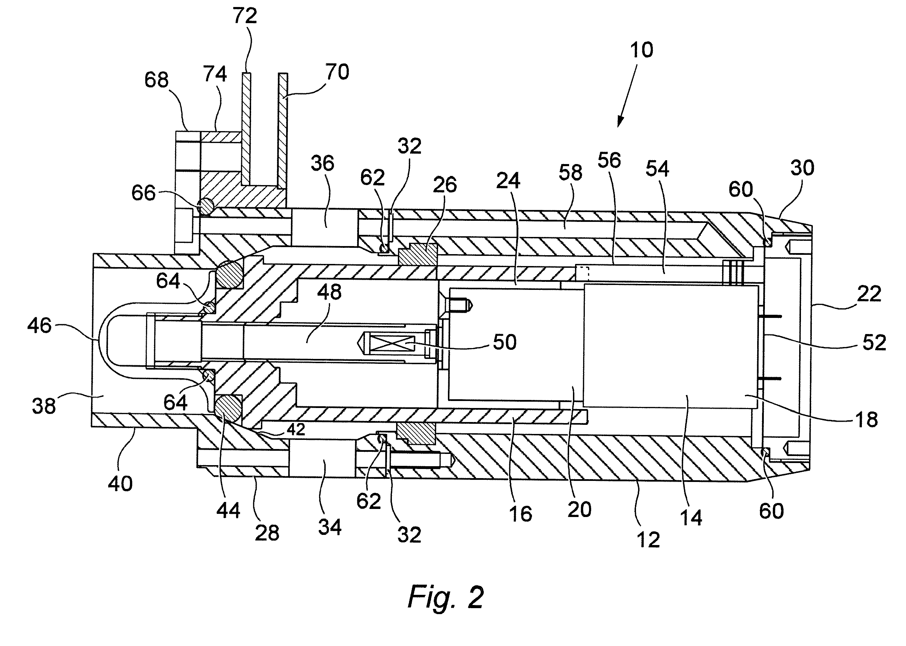

Die Figuren 1 und 2 zeigen eine Ausführungsform des erfindungsgemäßen Ventils 10.
- Fig. 1: zeigt das Ventil 10 in geöffneter Position.
- Fig. 2: zeigt dasselbe Ventil 10 in geschlossener Position.

Die Figuren 1 und 2 zeigen das Ventil 10 in einer Schnittdarstellung mit einer parallel zur Längsachse des Ventils 10 orientierten Schnittebene, die in etwa durch das Zentrum des Ventils 10 verläuft. In der Darstellung nicht sichtbar ist, dass das Ventil 10 quer zur Längsrichtung einen kreisrunden oder zumindest im Wesentlichen kreisrunden Querschnitt aufweist.

Das Ventil 10 umfasst in einem Gehäuse 12 eine Antriebseinheit 14 und einen Kolben 16. Bei geöffnetem Ventil 10 (Fig. 1) befindet sich der Kolben 16 in einer zurückgezogenen Position auf der rechten (oberen) Seite der Darstellung. Bei geschlossenem Ventil 10 (FIG. 2) befindet sich der Kolben 16 in einer vorgeschobenen Position und entsprechend auf der linken (unteren) Seite der Darstellung.

Bei der dargestellten Ausführungsform des Ventils 10 umfasst die Antriebseinheit 14 einen Motor 18 und ein Getriebe 20. Bei dem Motor 18 handelt es sich z. B. um einen Gleichstrommotor (z. B. 24V DC) und es sind auf einer Unterseite des Motors 18 noch zwei Kontaktelemente zur Zuführung von elektrischen Steuersignalen und/oder einer elektrischen Versorgungsspannung erkennbar. Zum Einführen der Antriebseinheit 14, hier mit Getriebe 20 und Motor 18, ist das Gehäuse 12 auf einer Unterseite offen und mit einer Endkappe 22 verschließbar. Das Getriebe 20 ist von einer dieses umgebenden Kolbenführungshülse 24 zur Führung des Kolbens 16 beim Öffnen oder Schließen des Ventils 10 umschlossen. Des Weiteren wird der Kolben 16 im Gehäuse 12 durch einen an der Innenseite des Gehäuses 12 angebrachten, als Kolbendichtung fungierenden Dichtungsring 26 geführt. Die Kolbenführungshülse 24 ist formschlüssig auf eine Innenkontur eines im Kolben 16 gebildeten Hohlraums abgestimmt, so dass die Kolbenführungshülse 24 die Führung des Kolbens 16 auf dessen Innenseite bewirkt. Auf der Außenseite des Kolbens 16 ergeben sich die Kolbenführung und eine Justierung des Kolbens 16 im Gehäuse 12 mit dem Dichtungsring 26.

Zum Anbringen des Dichtungsrings 26 und zum Einsetzen des Kolbens 16 in das Gehäuse 12 ist dieses zweigeteilt und ein erstes Gehäuseteil 28 bildet ein oberes Kolbendrittel und ein zweites Gehäusesteil 30 entsprechend den restlichen Gehäuseteil zur Aufnahme der Antriebseinheit 14. In kombinierten Zustand erscheinen beide Gehäuseteile 28, 30 als eine Einheit; eine räumliche Trennung beider Gehäuseteile 28, 30 besteht nicht. Eine Trennstelle 32 zwischen beiden Gehäuseteilen 28, 30 liegt von der Gehäuseunterseite aus gesehen leicht oberhalb der Position des Dichtungsrings 26. In getrennter Konfiguration kann in das untere Gehäuseteil 30 der Dichtungsring 26 durch leichtes Verformen und nachfolgendes Entspannen in die zur Aufnahme des Dichtungsrings 26 in der Innenoberfläche des Gehäuses 12 vorgesehene Ausnehmung eingebracht werden. Sodann kann der Kolben 16 in das Ventilgehäuse 12, nämlich zunächst dessen zweites Gehäuseteil 30, eingeführt werden. Dabei wird der Kolben 16 so eingesetzt, dass sich eine äußere Führung durch den Dichtungsring 26 und eine innere Führung durch die Kolbenführungshülse 24 ergibt. Später ist dann das erste Gehäuseteil 28 aufsetzbar.

Das erste Gehäuseteil 28 umfasst zumindest eine Einlassöffnung 34, 36 und zumindest eine Auslassöffnung 38. In der Schnittdarstellung der beiden Figuren sind zwei Einlassöffnungen 34, 36 erkennbar. Tatsächlich umfasst das dargestellte Ventil 10 sechs Einlassöffnungen 34, 36, die äquidistant über den Außenumfang des Gehäuses 12, nämlich des ersten Gehäuseteils 28, verteilt sind. Als mindestens eine Auslassöffnung 38 ist bei der gezeigten Ausführungsform eine zentrale Auslassöffnung 38 mit einem zur Mittelachse des Gehäuses 12 koaxialen Zentrum gezeigt. Im Bereich der Auslassöffnung 38 bildet das erste Gehäuseteil 28 ein Gehäusevorderteil 40 aus. Dieses ist bei der dargestellten Ausführungsform als Stutzen gestaltet, so dass z. B. die Anbringung eines Schlauchs möglich ist. Alternativ kommt auch die Anbringung eines Gewindes, insbesondere eines Außengewindes, in Betracht, so dass das Ventil 10 im Bereich seiner Auslassöffnung 38 mit einem Rohr oder einer Rohrmuffe kontaktierbar ist.

Wie am besten anhand der Darstellung in Fig. 1 erkennbar ist, weist das erste Gehäuseteil 28 einen sich konisch verengenden Durchflussraum auf. Bei der dargestellten Ausführungsform ist die konische Verengung nur in einem Abschnitt der Längserstreckung des ersten Gehäuseteils 18 vorgesehen und dieser Abschnitt wir im Folgenden zur Referenzierung als Innenkonus 42 bezeichnet. Zur Kontaktierung dieses Innenkonus 42 und zur Gewährleistung eines sicheren Schließens des Ventils 10 weist der Kolben 16 an einer Frontseite einen kopfseitigen Dichtungsring 44 auf. Der Kopf des Kolbens 16 ist so gestaltet, dass der kopfseitige Dichtungsring 44 in im Kolbenkopf gebildeten Ausnehmungen platzierbar ist und in einer dortigen Position bei geschlossenem Ventil 10, also vorgeschobenem Kolben 16 (Fig. 2) den Innenkonus 42 kontaktiert.

Der Kolbenkopf ist mit einer Verschlusskappe 46 abgedeckt. Die Verschlusskappe 46 ist mit dem Kolbenkopf lösbar verbindbar, z. B. durch Verschrauben. Die Verschlusskappe 46 hat im Querschnitt eine glockenförmige Kontur und ist rotations-symmetrisch gestaltet, so dass sich eine kantenfreie Kontur ergibt. Die Verschlusskappe 46 wirkt bei geöffnetem Ventil 10 (Fig. 1) damit auch als Leitelement für das jeweils durch das Ventil 10 strömende Medium.

Die Verschlusskappe 46 deckt eine von der Antriebseinheit 14 angetriebene Gewindespindel 48 ab. Die Gewinde- oder Drehspindel 48 ist mit einer vom Getriebe 20 ausgehenden Getriebewelle 50 drehfest verbunden. Zur Herstellung einer solchen drehfesten Verbindung zwischen Gewindespindel 48 und Getriebewelle 50 kommt bevorzugt in Betracht (nicht dargestellt), die Gewindespindel 48 zunächst zu erwärmen, dann auf die Getriebewelle 50 aufzustecken und die drehfeste Verbindung (Passsitz) durch anschließendes Abkühlen zu erreichen, wobei das Abkühlen eventuell noch durch ein Kältespray oder dergleichen beschleunigt werden kann. Darüber hinaus oder alternativ kommt auch ein Verkleben oder dergleichen von Gewindespindel 48 und Getriebewelle 50 in Betracht.

An einer Unterseite des Gehäuses 12 wird die Antriebseinheit 14, nämlich dessen Motor 18, mit einer Motoraufnahmescheibe 52 fixiert. In der Motoraufnahmescheibe 52 wird ein als ein Teil einer Verdrehsicherung 54 fungierender Stift 56 gehalten, der in montiertem Zustand parallel zur Längsachse des Ventils 10 ausgerichtet ist. Der Stift 56 greift in eine an einer Unterseite des Kolbens 16 gebildete schlitzförmige und axial orientierte Ausnehmung ein, die in der Schnittdarstellung in Fig. 1 und Fig. 2 nicht erkennbar ist, wobei aber der vom Stift 56 in einer in die Ausnehmung hineinragenden Position teilweise verdeckte Abschnitt des Kolbens in diesem Bereich durch eine gestrichelte Kontur dargestellt ist. Der Stift 56 und die schlitzförmige Ausnehmung im Kolben 16 wirken zusammen als Verdrehsicherung 54, so dass jede Rotationsbewegung der Antriebseinheit 14 in eine translatorische Bewegung des Kolbens 16 umgesetzt wird.

Zur Kontaktierung der Antriebseinheit 14, hier also zur elektrischen Kontaktierung des Motors 18, dient ein Zuleitungskanal 58, durch den elektrische Leitungen von der Seite des Gehäusevorderteils 40 bis zum Gehäuseunterteil geführt und dort an den dafür vorgesehenen Kontaktelementen des Motors 18 angeschlossen werden können.

Das Ventil 10 weist über die bereits beschriebenen Dichtungen, nämlich die Kolbendichtung (Dichtungsring 26 / Abstreifring) und den kopfseitigen Dichtungsring 44 hinaus weitere Dichtungen auf, die sämtlich als O-Ring ausgeführt sind, nämlich eine Dichtung zwischen Gehäuse 12 und Endkappe 22 (Endkappendichtung 60), sodann eine Dichtung zwischen den beiden Gehäuseteilen 28, 30 (Gehäusezwischendichtung 62), eine Dichtung zwischen Verschlusskappe 46 und Kolbenkopf (Verschlusskappendichtung 64) und schließlich zumindest eine Dichtung zwischen dem Ventilgehäuse 12, nämlich dessen Oberteil 28, und einem Behältnis, in das das Ventil 10 eingebaut ist (Einbaudichtung 66).

Zum Einbau des Ventils 10 in z. B. eine Wanne zum Auffangen von Flüssigkeiten, insbesondere eine Flüssigkeitsrückhaltevorrichtung wie in der nicht vorveröffentlichten DE 10 2009 056 276.1 beschrieben, weist das Ventil 10 an seiner Vorderseite einen Flansch 68 (Ventil-Einbauflansch) auf. Die Position des Flansches 68 entlang der axialen Erstreckung des Ventilgehäuses 12 gewährleistet, dass die oder jede Einlassöffnung 34, 36 im Innern des von der jeweiligen Wanne oder dergleichen gebildeten Volumens liegt, während die oder jede Auslassöffnung 38 sich entsprechend außerhalb eines solchen Volumens befindet.

Für eine Konstellation des Einbaus des dargestellten Ventils 10 in die Flüssigkeitsrückhaltevorrichtung gemäß der DE 10 2009 056 276.1 ist von dieser eine zweischalige Wand, nämlich zum einen eine Rückhalterwand 70 und zum anderen eine Wannenwand 72 gezeigt. Die Rückhalterwand 70 bildet gleichsam die Innenwand der Flüssigkeitsrückhaltevorrichtung und die Wannenwand 72 entsprechend dessen Außenwand, wobei sich die Zweischaligkeit der Flüssigkeitsrückhaltevorrichtung vor allem aus Gründen der Fertigungsvereinfachung ergibt, weil ein Kanten der Rückhalterwand 70 mit Null-Radius zum Erhalt der Wannenwand 72 nicht möglich ist. Die Rückhalterwand 70 kann Verfärbungen vom Schweißen oder ähnliche Bearbeitungsspuren aufweisen, während die Wannenwand 72 frei von derartigen Spuren bleibt und sich entsprechend besonders für die Außenseite der Rückhaltevorrichtung eignet. Zum Anbringen des Ventils 10 an der Flüssigkeitsrückhaltevorrichtung ist an dieser ein Ablaufeinschweißring 74 angebracht, welcher also mit der Rückhalterwand 70 und der Wannenwand 72 verschweißt ist. An diesem Ablaufeinschweißring 74 kann das Ventil 10 durch Verschrauben oder in sonst geeigneter Art und Weise befestigt werden. Gezeigt ist dazu zumindest auf einer Seite in den Figuren 1 und 2 eine Gewindebohrung im Ablaufeinschweißring 74 und ein Durchführungsloch im Flansch 68.

Im in ein Volumen eingeführten Zustand befindet sich also der wesentliche Teil des Ventils 10 im Innern dieses Volumens, also zumindest der Teil, der die Antriebseinheit 14 aufnimmt. Auf der Außenseite des Volumens ist von dem Ventil 10 nur ein Teil von dessen erstem Gehäuseabschnitt 28, nämlich das Gehäusevorderteil 40, sichtbar. Antrieb und Zuleitung sind also in ihrer im Innern des Volumens befindlichen Position gegen mechanische Beschädigungen und dergleichen geschützt. Zudem ergibt sich eine äußerst kompakte Bauform bei gleichzeitig hoher Durchflussmenge.

Das Ventilgehäuse 12, die Endkappe 22, die Motoraufnahmescheibe 52, der Kolben 16 und die Verschlusskappe 46 sind aus Metall, insbesondere Edelstahl, gefertigt. Bei einem Ventil 10 mit einem kreisrunden Querschnitt lassen sich diese Teile bevorzugt als Drehteile herstellen.

Zusammenfassend lässt sich die vorliegende Erfindung damit kurz wie folgt beschreiben: Es wird ein Ventil 10 mit einer Antriebseinheit 14, einem Kolben 16 und einem Gehäuse 12 angegeben, bei dem das Gehäuse 12 sowohl die Antriebseinheit 14 wie auch den Kolben 16 aufnimmt, so dass sich eine besonders kompakte Bauform ergibt, die insbesondere mit dem größten Teil des Gehäuses 12 in ein abzudichtendes Volumen, z. B. eine Wanne, ein Rohr oder dergleichen, einführbar ist.

**Bezugszeichenliste**

| | | | |
|---|---|---|---|
| 10 | Ventil | 72 | Wannenwand |
| 12 | Gehäuse | 74 | Ablaufeinschweißring |
| 14 | Antriebseinheit | | |
| 16 | Kolben | | |
| 18 | Motor | | |
| 20 | Getriebe | | |
| 22 | Endkappe | | |
| 24 | Kolbenführungshülse | | |
| 26 | Dichtungsring | | |
| 28 | erstes Gehäuseteil | | |
| 30 | zweites Gehäuseteil | | |
| 32 | Trennstelle | | |
| 34 | Einlassöffnung | | |
| 36 | Einlassöffnung | | |
| 38 | Auslassöffnung | | |
| 40 | Gehäusevorderteil | | |
| 42 | Innenkonus | | |
| 44 | kopfseitiger Dichtungsring | | |
| 46 | Verschlusskappe | | |
| 48 | Gewindespindel | | |
| 50 | Getriebewelle | | |
| 52 | Motoraufnahmescheibe | | |
| 54 | Verdrehsicherung | | |
| 56 | Stift | | |
| 58 | Zuleitungskanal | | |
| 60 | Endkappendichtung | | |
| 62 | Gehäusezwischendichtung | | |
| 64 | Verschlusskappendichtung | | |
| 66 | Einbaudichtung | | |
| 68 | Flansch | | |
| 70 | Rückhalterwand | | |

## Patentansprüche

1. Ventil (10) mit einem Gehäuse (12), einem Kolben (16) und einer Antriebseinheit (14) zum Antrieb des Kolbens und
mit zumindest einer Einlassöffnung (34) und mindestens einer Auslassöffnung (38) in einem ersten Gehäuseteil (28) sowie einem die Antriebseinheit (14) und den Kolben (16) in einer Ruheposition aufnehmenden zweiten Gehäuseteil (30),
wobei das Gehäuse (12) sowohl die Antriebseinheit (14) wie auch den Kolben (16) aufnimmt,
**gekennzeichnet durch**,
einen am Gehäuse (12) gegenüberliegend von einer Position der Antriebseinheit (14) und axial entlang des Gehäuses (12) zwischen der mindestens einen Einlassöffnung (34, 36) und der mindestens einen Auslassöffnung (38) angeordneten Flansch (68) zum Einbau des Ventils (10) in eine Wanne zum Auffangen von Flüssigkeiten,
wobei sich das zweite Gehäuseteil (30) mit der Antriebseinheit (14) beim Einbau des Ventils (10) in die Wanne in dem **durch** die Wanne gebildeten Volumen befindet und
wobei zur Kontaktierung der Antriebseinheit (14) ein Zuleitungskanal (58) im Gehäuse (12) von einem im ersten Gehäuseteil (28) gebildeten Gehäusevorderteil (40) bis zu einem im zweiten Gehäuseteil (30) gebildeten Gehäuseunterteil verläuft.

2. Ventil (10) nach einem der vorangehenden Ansprüche, mit einer Mehrzahl von insbesondere äquidistant über den Außenumfang des Gehäuses (12) verteilten Einlassöffnungen (36) und genau einer axial zentrierten Auslassöffnung (38).

3. Ventil (10) nach einem der vorangehenden Ansprüche, wobei die Antriebseinheit (14) zusätzlich als Führungselement für den Kolben (16) fungiert.

4. Ventil (10) nach Anspruch 3, wobei ein von der Antriebseinheit (14) umfasstes Getriebe (20) eine Außenkontur aufweist, die formschlüssig auf eine Innenkontur eines im Kolben (16) gebildeten Hohlraums abgestimmt ist.

5. Ventil (10) nach einem der vorangehenden Ansprüche, mit einer Verdrehsicherung (54) im Kolben (16).

6. Ventil (10) nach einem der vorangehenden Ansprüche, wobei der Kolben (16) mit der Antriebseinheit (14) über eine Gewindespindel (48) verbunden ist.

7. Ventil (10) nach Anspruch 6, wobei ein Spindelkopf mit einer mit dem Kolben (16) lösbar verbindbaren Verschlusskappe (46) abgedeckt ist.

8. Ventil (10) nach einem der vorangehenden Ansprüche mit einem sich konisch verengenden Durchflussraum (42).

9. Ventil (10) nach Anspruch 8, mit einem an einer Frontseite des Kolbens (16) angeordneten Dichtungsring (44), der in Größe und Position zur Kontaktierung der Seitenwände des Durchflussraums im Bereich der konischen Verengung vorgesehen ist.

10. Ventil (10) nach einem der vorangehenden Ansprüche, mit einer gleichzeitig als Abstreifring fungierenden Dichtung (26) zwischen Kolben (16) und Innenoberfläche des Gehäuses (12).

11. Ventil (10) nach einem der vorangehenden Ansprüche, mit mindestens einem Heizelement.

12. Ventil (10) nach einem der vorangehenden Ansprüche, wobei die Antriebseinheit (14) impulsgesteuert ist.

13. Ventil (10) nach Anspruch 12, mit einer Steuerungseinheit und davon umfassten Mitteln zum Abschalten der Antriebseinheit (14) in Abhängigkeit von einer erfassten Stromaufnahme.

14. Rückhaltevorrichtung mit einem Ventil (10) nach einem der Ansprüche 1 bis 13.

15. Rückhaltevorrichtung nach Anspruch 14, mit einer Ventilsteuerung und davon umfassten Mitteln zur automatischen Ansteuerung des Ventils (10) zu vorgegebenen oder vorgebbaren Zeitpunkten.

## Claims

1. A valve (10) having a housing (12), a piston (16) and a drive unit (14) for driving said piston, and
having at least one inlet opening (34) and at least one outlet opening (38) in a first housing portion (28) as well as a second housing portion (30) accommodating said drive unit (14) and said piston (16) in a resting position,
wherein said housing (12) accommodates both said drive unit (14) and said piston (16),
**characterised by**
a flange (68) for mounting said valve (10) in a trough for collecting liquids, said flange (68) being disposed on said housing (12) opposite a position of said drive unit (14) and axially along said housing (12) between said at least one inlet opening (34, 36) and said at least one outlet opening (38),
wherein during the mounting of said valve (10) in said trough, said second housing portion (30) with said drive unit (14) is located in the volume formed by said trough, and
wherein for contacting said drive unit (14), a supply channel (58) extends in said housing (12) between a housing front portion (40) formed in said first housing portion (28) and a housing bottom portion formed in said second housing portion (30).

2. The valve (10) as claimed in the preceding claim, comprising a plurality of inlet openings (36) spread in particular equidistantly over the outer circumference of said housing (12), and exactly one axially centered outlet opening (38).

3. The valve (10) as claimed in any one of the preceding claims, wherein said drive unit (14) additionally acts as a guiding element for said piston (16).

4. The valve (10) as claimed in claim 3, wherein a transmission (20) comprised by said drive unit (14) has an outer contour that is matched in a form-fitting manner to an inner contour of a cavity formed in said piston (16).

5. The valve (10) as claimed in any one of the preceding claims, comprising an anti-turn device (54) in said piston (16).

6. The valve (10) as claimed in any one of the preceding claims, wherein said piston (16) is connected to said drive unit (14) via a threaded spindle (48).

7. The valve (10) as claimed in claim 6, wherein a spindle head is covered with a closure cap (46) that can be releasably connected to said piston (16).

8. The valve (10) as claimed in any one of the preceding claims, having a conically narrowing flow-through cavity (42).

9. The valve (10) as claimed in claim 8, having a sealing ring (44) provided on a front side of said piston (16), which sealing ring (44) is provided in terms of its size and position for contacting the lateral walls of said flow-through cavity in the region of the conical narrowing.

10. The valve (10) as claimed in any one of the preceding claims, comprising a seal (26) between said piston (16) and the inner surface of said housing (12), which seal (26) acts at the same time as a wiper ring.

11. The valve (10) as claimed in any one of the preceding claims, comprising at least one heating element.

12. The valve (10) as claimed in any one of the preceding claims, wherein said drive unit (14) is pulse-controlled.

13. The valve (10) as claimed in claim 12, comprising a control unit and means comprised thereby for switching off said drive unit (14) as a function of a sensed power consumption.

14. A retaining device having a valve (10) as claimed in any one of claims 1 to 13.

15. The retaining device as claimed in claim 14, having a valve control and means comprised thereby for automatically driving said valve (10) at specified or specifiable times.

## Revendications

1. Soupape (10) comprenant une carcasse (12), un piston (16) et une unité d'entraînement (14) pour l'entraînement du piston et
au moins une ouverture d'entrée (34) et au moins une ouverture de sortie (38) dans une première partie (28) de la carcasse, ainsi qu'une seconde partie (30) de la carcasse qui contient l'unité d'entraînement (14) et le piston (16) dans une position de repos,
la carcasse (12) contenant aussi bien l'unité d'entraînement (14) que le piston (16),
**caractérisé par**
une bride (68) servant pour le montage de la soupape (10) dans une cuve destinée à recevoir des liquides, bride disposée sur la carcasse (12) à l'opposé d'une position de l'unité d'entraînement (14) et placée entre l'au moins une ouverture d'entrée (34, 36) et l'au moins une ouverture de sortie (38), vu dans la direction axiale selon la longueur de la carcasse (12),
la seconde partie (30) de la carcasse qui comprend l'unité d'entraînement (14) se trouvant dans le volume formé par la cuve lors du montage de la soupape (10) dans la cuve, et
un canal d'alimentation (58) s'étendant dans la carcasse (12), d'une partie avant de carcasse (40) formée dans la première partie de carcasse (28) jusqu'à une partie inférieure de carcasse formée dans la seconde partie de carcasse (30), pour la connexion de l'unité d'entraînement (14).

2. Soupape (10) selon l'une des revendications précédentes, comportant une pluralité d'ouvertures d'entrée (36) réparties, en particulier de façon équidistante, sur la périphérie extérieure de la carcasse (12) et exactement une ouverture de sortie (38) centrée axialement.

3. Soupape (10) selon l'une des revendications précédentes, dans laquelle l'unité d'entraînement (14) fait en supplément fonction d'élément de guidage pour le piston (16).

4. Soupape (10) selon la revendication 3, dans laquelle une transmission (20) comprise dans l'unité d'entraînement (14) présente un contour extérieur qui est adapté géométriquement à un profil intérieur d'une cavité formée dans le piston (16).

5. Soupape (10) selon l'une des revendications précédentes, comportant un dispositif anti-rotation (54) dans le piston (16).

6. Soupape (10) selon l'une des revendications précédentes, dans laquelle le piston (16) est relié à l'unité d'entraînement (14) par l'intermédiaire d'une broche filetée (48).

7. Soupape (10) selon la revendication 6, dans laquelle une tête de la broche est recouverte par un capuchon de fermeture (46) qui peut être assemblé au piston (16) de façon démontable.

8. Soupape (10) selon l'une des revendications précédentes, comportant un espace d'écoulement (42) qui se rétrécit avec une forme conique.

9. Soupape (10) selon la revendication 8, comportant une bague d'étanchéité (44) disposée sur un côté avant du piston (16), qui est prévue en dimension et en position pour entrer en contact avec les parois latérales de l'espace d'écoulement dans la région du rétrécissement conique.

10. Soupape (10) selon l'une des revendications précédentes, comportant une garniture d'étanchéité (26) faisant en même temps fonction de bague racleuse entre le piston (16) et la surface interne de la carcasse (12).

11. Soupape (10) selon l'une des revendications précédentes, comportant au moins un élément chauffant.

12. Soupape (10) selon l'une des revendications précédentes, dans laquelle l'unité d'entraînement (14) est commandée par impulsions.

13. Soupape (10) selon la revendication 12, comportant une unité de commande et des moyens compris dans cette unité, qui servent à mettre l'unité d'entraînement (14) hors circuit en réponse à une consommation de courant détectée.

14. Dispositif de retenue comportant une soupape (10) selon l'une des revendications 1 à 13.

15. Dispositif de retenue selon la revendication 14, comportant une commande de soupape et des moyens compris dans cette commande pour assurer le pilotage automatique de la soupape (10) à des instants déterminés ou pouvant être déterminés.
